# EUROPÄISCHE PATENTSCHRIFT

(11) **EP 4 509 935 B1**
(45) Veröffentlichungstag und Bekanntmachung des Hinweises auf die Patenterteilung: **01.10.2025**
(21) Anmeldenummer: 23191936.6
(22) Anmeldetag: 17.08.2023
(51) Int. Cl.: G05B 19/042, G05B 19/05

(54) **VERFAHREN ZUM KONFIGURIEREN EINES SPS-GERÄTS UND EIN SPS-VERWALTUNGSSYSTEM ZUM AUSFÜHREN DES VERFAHRENS**
METHOD FOR CONFIGURING A PLC DEVICE AND PLC MANAGEMENT SYSTEM FOR CARRYING OUT SAID METHOD
PROCÉDÉ DE CONFIGURATION D'UN DISPOSITIF PLC ET SYSTÈME DE GESTION PLC POUR LA MISE EN OEUVRE DU PROCÉDÉ

(43) Veröffentlichungstag der Anmeldung: 19.02.2025
(73) Patentinhaber: SICK AG, 79183 Waldkirch (DE)
(72) Erfinder: Heidepriem, Sebastian, 79297 Winden i.E. (DE)
(74) Vertreter: Manitz Finsterwald Patent- und Rechtsanwaltspartnerschaft mbB

(56) Entgegenhaltungen:
- EP-A2- 1 710 647
- DE-A1- 102013 112 140

## Beschreibung

Die Erfindung betrifft ein Verfahren zum Konfigurieren eines SPS-Geräts und ein SPS-Verwaltungssystem zum Ausführen des Verfahrens.

SPS-Systeme (dt. Speicherprogrammierbare Steuerung; engl. Programmable Logic Controller (PLC)) sind computergesteuerte Systeme, die in der Automatisierungstechnik weit verbreitet sind. Die Hauptfunktion eines SPS-Systems besteht darin, industrielle Prozesse zu steuern und zu überwachen. Insbesondere werden mit einem SPS-System Abläufe in Fabriken, Maschinen und der Gebäudeautomatisierung gesteuert.

Ein SPS-System umfasst insbesondere eine SPS-Zentraleinheit und entsprechend an die SPS-Zentraleinheit angeschlossene SPS-Geräte. Weiterhin gibt es eine Applikationssoftware, über die das SPS-System programmiert und konfiguriert werden kann. Ein SPS-System arbeitet vorzugsweise in Echtzeit und eignet sich insbesondere dazu, um Prozesse zu automatisieren, die eine hohe Genauigkeit, Zuverlässigkeit und Geschwindigkeit erfordern.

SPS-Konfigurationen umfassen je nach Hersteller die Konfiguration einer ganzen Anlage. In der Regel bestimmt diese Konfiguration nicht nur das SPS-Programm der verwendeten Steuerungen, sondern auch die Konfiguration der angeschlossenen Komponenten. Im Falle von PROFINET wird die Konfiguration einzelner Module einer Komponente zum Start der Anlage einmalig übertragen.

Dafür stellt das SPS-Konfigurations-Tool häufig ein generisches Interface zur Verfügung, welches das Setzen von Parametern zulässt.

Zeitgemäße SPS-Komponenten wie Sensoren, Aktoren oder auch viele Maschinen, sind mittlerweile zu komplex, um durch einfache, wenige Parameter, welche in der SPS konfigurierbar sind, konfiguriert werden zu können. Beispielsweise gibt es für Sensoren Applikationen mit abgestimmten grafischen Benutzeroberflächen (Bediener-Schnittstellen), über die der Nutzer SPS-Gerät möglichst intuitiv parametrieren kann. Dieser graphisch unterstütze Ansatz einer Bedienerschnittstelle ist durch den generischen Ansatz von Parametern nicht ersetzbar.

Die EP 1 710 647 A2 beschreibt ein System zur Integration von Feldgeräten zur Überwachung einer technischen Anlage in einem Automatisierungssystem. Für jedes Feldgerät gibt es einen "Device Type Manager", über den das Feldgerät parametrisiert/konfiguriert und mittels der integrierten Programmiersoftware programmiert werden kann. Für jedes Feldgerät gibt es auch eine Schnittstelle, damit ein "Engineering Tool" mit den Feldgeräten Daten austauschen kann, um dadurch die technische Anlage zu überwachen.

Die DE 10 2013 112140 A1 beschreibt ein Verfahren zur Bedienung eines Feldgeräts mithilfe eines Bedienprogramms, das über eine Kommunikationsverbindung wie HART oder CDI-Kanal verbunden ist. Dabei wird eine Steuervariable vom Feldgerät an das Bedienprogramm übertragen, um den Ablauf des Programms zu steuern und Funktionen wie die Aktivierung oder Deaktivierung spezifischer Prozesse zu ermöglichen.

Es ist daher die Aufgabe der hier vorliegenden Erfindung ein Verfahren zu schaffen, mit welchem SPS-Geräte sehr leicht verwaltet und konfiguriert werden können.

Die Aufgabe wird durch das erfindungsgemäße Verfahren zum Konfigurieren eines SPS-Geräts gemäß dem Anspruch 1 und durch das SPS-Verwaltungssystem gemäß dem Anspruch 15 gelöst. In den Ansprüchen 2 bis 14 sind vorteilhafte Weiterbildungen des erfindungsgemäßen Verfahrens angegeben.

Das erfindungsgemäße Verfahren dient zum Konfigurieren eines SPS-Geräts, welches an eine SPS-Zentraleinheit angeschlossen ist, mittels einer SPS-Konfigurationsinformation. In einem ersten Verfahrensschritt wird eine erste Applikation ausgeführt und durch diese erste Applikation eine erste grafische Benutzeroberfläche zum Erzeugen einer Konfigurationsinformation für das zumindest eine SPS-Gerät dargestellt. In einem zweiten Verfahrensschritt wird zumindest eine Benutzereingabe auf der ersten grafischen Benutzeroberfläche durch die erste Applikation erfasst. In einem dritten Verfahrensschritt wird die Konfigurationsinformation mit zumindest einem Konfigurationsparameter für das zumindest eine SPS-Gerät anhand der erfassten Benutzereingabe durch die erste Applikation erzeugt. In einem vierten Verfahrensschritt wird eine zweite Applikation ausgeführt und durch diese eine zweite grafische Benutzeroberfläche zur Steuerung der SPS-Zentraleinheit dargestellt. In einem fünften Verfahrensschritt wird die Konfigurationsinformation von der ersten Applikation, insbesondere in ein Eingabefeld zum Konfigurieren des zumindest einen SPS-Geräts auf der zweiten grafischen Benutzeroberfläche der zweiten Applikation übertragen. In einem sechsten Verfahrensschritt wird anhand der Konfigurationsinformation eine SPS-Konfigurationsinformation durch die zweite Applikation erzeugt. In einem siebten Verfahrensschritt wird die SPS-Konfigurationsinformation an das zumindest eine SPS-Gerät durch die SPS-Zentraleinheit übertragen. Bevorzugt wird in einem achten Verfahrensschritt die durch das SPS-Gerät empfangene SPS-Konfigurationsinformation durch das SPS-Gerät geladen.

Anders ausgedrückt, kann die speziell zur Konfiguration des SPS-Geräts ausgestaltete erste grafische Benutzeroberfläche für die Konfiguration des SPS-Geräts genutzt werden, wobei trotzdem die Übermittlung der Konfiguration an das SPS-Gerät zentral durch die SPS-Zentraleinheit erfolgt. Bei der ersten grafischen Benutzeroberfläche kann es sich z.B. um ein "Engineering UI" handeln. Dazu wird die Konfigurationsinformation, welche in der ersten grafischen Benutzeroberfläche erzeugt wurde, einfach an die zweite grafische Benutzeroberfläche übertragen und somit der SPS-Zentraleinheit zur Verfügung gestellt. Genauer gesagt, kann die Konfigurationsinformation z.B. im Projekt, z.B. einer Projektdatei, welche die Konfiguration der SPS-Zentraleinheit enthält, gespeichert und dann bei jedem Systemstart der SPS-Zentraleinheit an das SPS-Gerät übertragen werden. Eine direkte Verbindung zwischen der ersten Applikation und dem SPS-Gerät ist nicht notwendig. Überdies ist das Verteilen der Konfiguration auf mehrere gleichartige Anlagen einfach zu bewerkstelligen. Auch das Kopieren einer Konfiguration auf mehrere gleichartige SPS-Geräte kann durch Mehrfachverwendung der Konfigurationsinformation einfach erreicht werden.

Es ist also besonders vorteilhaft, dass bevorzugt die gesamte Zusammenstellung der Konfiguration des SPS-Geräts, also das Erstellen der Konfigurationsinformation für das SPS-Gerät, über eine (einzige) grafische Benutzeroberfläche erfolgt. Dadurch hat der Benutzer alle Vorteile, die eine genau auf das SPS-Gerät abgestimmte Benutzeroberfläche bieten kann. Weiterhin ist es vorteilhaft, dass diese Konfigurationsinformation, die durch die erste Applikation erzeugt wird, an die zweite Applikation übertragen wird, die aus der Konfigurationsinformation die benötigte SPS-Konfigurationsinformation generiert. Diese zweite Applikation dient zur Steuerung und/oder Konfiguration der SPS-Zentraleinheit. Die zweite Applikation muss in diesem Fall nicht die auf das SPS-Gerät genau abgestimmte Benutzeroberfläche beinhalten. Dadurch ist es ausreichend, wenn die zweite Applikation lediglich diejenigen Komponenten beinhaltet, die zur allgemeinen Steuerung eines SPS-Verwaltungssystem notwendig sind. Die zweite Applikation muss daher nicht noch mit einer intuitiven Benutzeroberfläche für jedes angeschlossenes SPS-Gerät versehen werden. Dadurch kann die Konfiguration eines SPS-Verwaltungssystem besonders einfach durchgeführt werden.

Kurz gesagt, wird also der Vorteil der einfachen und umfassenden Konfiguration durch die erste Benutzeroberfläche mit der einfachen Verteilung der Konfiguration durch die zweite Applikation kombiniert.

Bei dem SPS-Gerät kann es sich insbesondere um ein Feldgerät handeln, welches beispielsweise als Sensor oder Aktor ausgebildet ist. Das SPS-Gerät kann z.B. einen Überwachungssensor, wie einen Laserscanner oder ein Lichtgitter, eine Motorsteuerung und dergleichen umfassen. Für unterschiedliche SPS-Geräte kann jeweils eine unterschiedliche erste Applikation und eine unterschiedliche erste grafische Benutzeroberfläche verwendet werden, die auf die Einstellungsmöglichkeiten des jeweiligen SPS-Geräts angepasst sind. Es versteht sich, dass zur Konfiguration unterschiedlicher SPS-Geräte auch, insbesondere nacheinander, verschiedene solcher erster Applikationen verwendet werden können, um verschiedene Konfigurationsinformationen für verschiedene SPS-Geräte zu erzeugen und die verschiedenen Konfigurationsinformationen an die (einzige) zweite Applikation übertragen werden, um letztlich eine Konfiguration der verschiedenen SPS-Geräte durch die SPS-Zentraleinheit vorzunehmen.

Das SPS-Gerät verwendet bevorzugt die SPS-Konfigurationsinformationen in seinem Betrieb, wobei durch die SPS-Konfigurationsinformationen das Betriebsverhalten des SPS-Geräts geändert oder angepasst wird. Genauer gesagt, reagiert das SPS-Gerät auf den Empfang der SPS-Konfigurationsinformation bevorzugt mit einem Zurücksetzen von Parametern, insbesondere von konfigurationsrelevanten Variablen, auf Standard- bzw. Default-Wert und verarbeitet dann die SPS-Konfigurationsinformation durch entsprechendes Setzen der Parameter-Werte wie in der SPS-Konfigurationsinformation angegeben. Durch die SPS-Konfigurationsinformationen kann also das Verhalten des SPS-Geräts z.B. in einem industriellen Prozess geändert oder angepasst werden.

In einer erfindungsgemäßen Weiterbildung werden die erste Applikation und die zweite Applikation von demselben Computersystem ausgeführt. Hierbei handelt es sich insbesondere um ein Client-Computersystem. Die Applikation kann als lokale Installation oder als entfernte Installation ausgeführt werden. Eine entfernte Installation kann beispielsweise eine webbasierte Cloudinstallation sein. Dadurch hat der Benutzer einen optimalen Überblick, um das SPS-Gerät mittels der ersten grafischen Benutzeroberfläche individuell konfigurieren zu können und sieht auch gleichzeitig die Konfigurationsmöglichkeiten des gesamten SPS-Verwaltungssystems. Es ist auch denkbar, dass die erste Applikation eine lokale Installation ist und die zweite Applikation von einem Webserver auf der SPS-Zentraleinheit bereitgestellt wird.

In einer erfindungsgemäßen Weiterbildung umfasst der zumindest eine Konfigurationsparameter ein Name-Wert-Paar. Bevorzugt wird eine Vielzahl von Konfigurationsparametern in aufeinanderfolgenden Name-Wert-Paaren in der Konfigurationsinformation kodiert. Bei einem Name-Wert-Paar kann es sich beispielsweise um eine Variable handeln, die mit einem bestimmten Wert belegt ist. Beispielsweise kann die Aktualisierungsfrequenz eines SPS-Geräts, in Form eines SPS-Überwachungssensors, als Name-Wert-Paar den zumindest einen Konfigurationsparameter darstellen. Dadurch ist eine sehr leichte Zuordnung der zu konfigurierenden Eigenschaft des SPS-Geräts zu dem eigentlichen Wert möglich. Ein Name-Wert-Paar kann beispielsweise durch einen sogenannten CloningString dargestellt oder erzeugt werden. Neben Name-Wert-Paaren können auch CoLaA*-Schreibbefehle unter Verwendung von Variablen-Namen zur Erzeugung des Name-Wert-Paars verwendet werden. CoLaA ist ein auf sichtbaren (ASCII-Werte 0x20...0x1F) ASCII-Zeichen basierendes Protokoll.

Bei mehreren Name-Wert-Paaren können diese in einem gemeinsamen String vorliegen und z.B. durch ein vorbestimmtes Trennzeichen (z.B. ";") getrennt sein. Die Name-Wert-Paare können insbesondere als JSON (JavaScript Object Notation) oder XML (eXtendable Markup Language) gespeichert werden, beispielsweise als JSON- und/oder XML-Datei.

In einer vorteilhaften Weiterbildung umfasst das Name-Wert-Paar oder die mehreren Name-Wert-Paare die erfasste Einstellung durch die Benutzereingabe eines Elements auf der ersten grafischen Benutzeroberfläche. Mit anderen Worten kann beispielsweise über eine Check-Box auf der ersten grafischen Benutzeroberfläche eine Eigenschaft des SPS-Geräts, wie beispielsweise die Aktualisierungsfrequenz eines SPS-Überwachungssensors auf einem bestimmten Wert festgelegt werden. Zumindest eines oder alle, der durch den Benutzer auswählbaren Elemente auf der grafischen Benutzeroberfläche haben einen Namen, wobei je nach Auswahl ein entsprechender Wert diesem Namen zugewiesen wird und die Kombination als Name-Wert-Paar den Konfigurationsparameter darstellt, der die Konfigurationsinformation bildet.

In einer vorteilhaften Weiterbildung ist der zumindest eine Konfigurationsparameter im Klartext und unverschlüsselt in der Konfigurationsinformation enthalten. Dies ist besonders vorteilhaft, weil dadurch der Benutzer diesen Konfigurationsparameter sehen, verstehen und diesen optional noch weiter anpassen kann. Bevorzugt ist der Konfigurationsparameter auch unsigniert.

In einer vorteilhaften Weiterbildung wird die Konfigurationsinformation durch einen Kopieren/Einfügen-Befehl von der ersten Applikation in das Eingabefeld der zweiten grafischen Benutzeroberfläche der zweiten Applikation übertragen, bevorzugt als Text. Beispielsweise kann ein Funktionsbutton in der ersten grafischen Benutzeroberfläche die Konfiguration in die (Windows-)Zwischenablage kopieren. Dadurch ist keine aufwändige API notwendig und eine bereits vorhandene Software zur Verwaltung des SPS-Verwaltungssystems kann problemlos und ohne Anpassung weiterverwendet werden. Vorzugsweise drückt der Benutzer lediglich auf Kopieren und in der zweiten Applikation auf Einfügen. Dieser Vorgang kann ein Kopieren in eine Zwischenablage des Betriebssystems umfassen. Natürlich kann ein solches Übertragen von der ersten in die zweite Applikation auch durch eine API (Application Programming Interface) erledigt werden. Die zweite Applikation kann dazu eine API zur Verfügung stellen, über welche die erste Applikation die Konfigurationsinformation an die zweite Applikation überträgt.

In einer vorteilhaften Weiterbildung entspricht die SPS-Konfigurationsinformation der Konfigurationsinformation. In diesem Fall kann direkt die Konfigurationsinformation, die durch die erste Applikation erstellt wird, an das entsprechende SPS-Gerät über die SPS-Zentraleinheit übertragen werden. Alternativ ist die SPS-Konfigurationsinformation aus der Konfigurationsinformation abgeleitet. Die SPS-Konfigurationsinformation unterscheidet sich beispielsweise durch eine Kodierung und/oder Verschlüsselung und/oder Signierung und/oder einem anderen Layout. Sie muss in diesem Fall nicht mehr zwingend im Klartext vorliegen.

In einer vorteilhaften Weiterbildung wird lediglich für diejenige, über die erste grafische Benutzeroberfläche konfigurierte, Eigenschaft des SPS-Geräts ein Konfigurationsparameter der Konfigurationsinformation hinzugefügt, welche durch die Benutzereingabe (aktiv) festgelegt wird. Kann der Benutzer beispielsweise 30 Eigenschaften des SPS-Geräts über die erste Benutzeroberfläche einstellen und tut er dies lediglich für fünf Eigenschaften, so werden auch nur fünf Konfigurationsparameter der Konfigurationsinformation hinzugefügt. Es ist hier besonders vorteilhaft, dass die Konfigurationsinformation übersichtlich gehalten wird.

In einer vorteilhaften Weiterbildung wird lediglich für diejenige, über die erste grafische Benutzeroberfläche konfigurierte, Eigenschaft des SPS-Geräts ein Konfigurationsparameter der Konfigurationsinformation hinzugefügt, welche einen Wert aufweist, der von einem Standardwert abweicht. Ist der Standardwert, für eine Aktualisierungsfrequenz eines SPS-Geräts in Form eines SPS-Überwachungssensors beispielsweise 120 Hz und wird dieser Wert auf 100 Hz geändert, so wird aufgrund der Abweichung von dem Standardwert ein Konfigurationsparameter erzeugt und der Konfigurationsinformation hinzugefügt. Wird die Aktualisierungsfrequenz nicht geändert, so wird kein Konfigurationsparameter erzeugt. Grundsätzlich gilt in diesem Fall bei Verwendung von allgemeinen CloningStrings, dass alle Variablen, also Eigenschaften des SPS-Geräts, die durch die erste grafische Benutzeroberfläche geändert werden können, mit Default-Werten verglichen werden. Dabei werden dann nur die Variablen in die CloningStrings übernommen, welche einen zu ihren Default-Werten unterschiedlichen Wert aufweisen. Dadurch wird die Gesamtgröße der CloningStrings maßgeblich reduziert. In diesem Fall kann auch von einem DifferentialCloningString gesprochen werden.

Weiterhin kann die SPS-Konfigurationsinformation, insbesondere in der Form eines DifferentialCloningStrings, auch einen Verweis auf einen von mehreren Sätzen von Standardwerten enthalten. Ist ein Verweis auf einen Satz von Standardwerten enthalten, so kann das SPS-Gerät jeweils die entsprechenden Standardwerte verwenden. Beispielsweise kann ein erster Satz von Standardwerten einen energiesparenden Betrieb bewirken, wohingegen ein zweiter Satz von Standardwerten einen Betrieb mit z.B. hoher Abtastrate ermöglicht. Beim ersten Satz von Standardwerten kann z.B. die Abtastrate oder die Aktualisierungsfrequenz gegenüber dem zweiten Satz verringert sein.

Ebenfalls kann die SPS-Konfigurationsinformation eine Überprüfungsinformation enthalten, beispielsweise in Form einer Checksumme oder eines Hashes. Hierdurch kann das SPS-Gerät überprüfen ob die SPS-Konfigurationsinformation korrekt übertragen wurde.

Ein Beispiels für zumindest einen Teil einer SPS-Konfigurationsinformation ist im Folgenden angegeben:
*{Backup:{Target:"CLV690-100-SWV1.23.0"},{Default:"Factory4"},{Parameter:[{Exp:1.23},{Span:45}, ..."},...],{ChkSum:0x14D 4}*

Es ist zu erkennen, dass die SPS-Konfigurationsinformation das zu konfigurierende SPS-Gerät ("Target"), sowie einen Hinweis auf einen vierten Satz von Standardwerten ("Default:"Factory4"") enthält. Weiterhin umfasst die SPS-Konfigurationsinformation Informationen über eine Belichtungszeit ("EXP") und den zu erfassenden Bereich ("Span"). Auch können zusätzliche Informationen enthalten sein. Schließlich umfasst die SPS-Konfigurationsinformation noch eine Checksumme.

In einer vorteilhaften Weiterbildung wird unabhängig von der, über die erste Benutzeroberfläche konfigurierte, Eigenschaft des SPS-Geräts zumindest ein Konfigurationsparameter der Konfigurationsinformation hinzugefügt, der einen bestimmten Wert aufweist. Mit anderen Worten wird stets zumindest ein Konfigurationsparameter der Konfigurationsinformation hinzugefügt und zwar unabhängig davon, ob die diesem Konfigurationsparameter zugrunde liegende Eigenschaft über die erste grafische Benutzeroberfläche geändert wurde. Hierbei kann von einem sogenannten "White-Listing" gesprochen werden. Grundsätzlich kann eine Vorauswahl dieser zwingend zu übertragenen Konfigurationsparameter vorliegen, die beispielsweise über die erste grafische Benutzeroberfläche auch geändert werden kann. Eine derartige Vorauswahl kann nützlich sein, damit der Benutzer ein tieferes Verständnis bzgl. der Wirkungsweise des SPS-Geräts hat, wenn er die im Klartext vorliegenden Konfigurationsinformationen durchsieht.

In einer vorteilhaften Weiterbildung wird für eine, über die erste Benutzeroberfläche konfigurierte, Eigenschaft des SPS-Geräts zumindest ein Konfigurationsparameter der Konfigurationsinformation hinzugefügt. Weiterhin wird ein weiterer Konfigurationsparameter der Konfigurationsinformation hinzugefügt, der von demjenigen Konfigurationsparameter abhängt, dessen Eigenschaft über die erste Benutzeroberfläche konfiguriert bzw. geändert wurde. Die entsprechenden Abhängigkeiten können für das jeweilige SPS-Gerät spezifisch sein und werden durch die erste Applikation verarbeitet.

In einer vorteilhaften Weiterbildung wird für jede, über die erste Benutzeroberfläche konfigurierbare, Eigenschaft des SPS-Geräts ein Konfigurationsparameter der Konfigurationsinformation hinzugefügt. In diesem Fall umfasst die Konfigurationsinformation sämtliche Konfigurationsparameter, die durch die erste grafische Benutzeroberfläche eingestellt werden können.

In einer vorteilhaften Weiterbildung werden eine, mehrere oder alle dieser konfigurierbaren Eigenschaften des SPS-Geräts durch eine Benutzereingabe festgelegt. Dies bedeutet, dass sämtliche Konfigurationsparameter der Konfigurationsinformation hinzugefügt werden. Dies gilt sowohl für Konfigurationsparameter, deren zugrunde liegende Eigenschaften durch die Benutzereingabe festgelegt wurden, als auch für solche Konfigurationsparameter, deren zugrunde liegende Eigenschaften nicht durch eine Benutzereingabe festgelegt wurden.

In einer vorteilhaften Weiterbildung wird für eine vorbestimmte, über die erste Benutzeroberfläche konfigurierbare, Eigenschaft des SPS-Geräts nie ein Konfigurationsparameter der Konfigurationsinformation hinzugefügt. Dadurch wird erreicht, dass das SPS-Gerät nicht bezüglich bestimmten, beispielsweise gesperrten, Eigenschaften konfiguriert werden kann. Hierbei kann von einem sogenannten "Black-Listing" gesprochen werden. Beispielsweise ist es denkbar, dass ein Benutzer eine Eigenschaft, wonach das SPS-Gerät, beispielsweise in Form eines Überwachungssensors, nur zu bestimmten Uhrzeiten aktiv ist, nicht verändern darf.

In einer vorteilhaften Weiterbildung ist die erste Applikation dazu ausgebildet, um dem Benutzer auf der ersten grafischen Benutzeroberfläche, in Abhängigkeit seines Benutzerrechts, unterschiedliche konfigurierbare Eigenschaften für das SPS-Gerät anzuzeigen. So kann Benutzer A weitere konfigurierbare Eigenschaften für das SPS-Gerät angezeigt bekommen als Benutzer B.

In einer vorteilhaften Weiterbildung initialisiert das SPS-Gerät Konfigurationsparameter, die nicht in der SPS-Konfigurationsinformation enthalten sind, mit einem Standardwert. Es müssen daher nur die aktuell eingestellten Konfigurationsparameter an das SPS-Gerät übertragen werden.

In einer vorteilhaften Weiterbildung überträgt das SPS-Gerät seine aktuelle Konfiguration als Konfigurationsinformation an die SPS-Zentraleinheit, wobei die SPS-Zentraleinheit dazu ausgebildet ist, um die Konfigurationsinformation des SPS-Geräts an die erste Applikation zu übertragen, die wiederum dazu ausgebildet ist, um diese zu empfangen und die empfangene Konfigurationsinformation des SPS-Geräts auf der ersten grafischen Benutzeroberfläche darzustellen. Dadurch kann ein Benutzer zusätzliche Änderungen auf der gewohnten Benutzeroberfläche machen. Das Übertragen der empfangenen Konfigurationsinformation von der ersten Applikation auf die zweite Applikation kann durch einen Kopieren/Einfügen-Befehl erfolgen. Es ist auch denkbar, dass die empfangene Konfigurationsinformation nur diejenigen Konfigurationsparameter umfasst, die sich von einer Standardeinstellung unterscheiden. Die zweite Applikation verwendet dann für Konfigurationsparameter, die nicht in der Konfigurationsinformation enthalten sind, Standardwerte.

In einer vorteilhaften Weiterbildung ist die erste Applikation dazu ausgebildet, um ein Auswahlmenü auf der ersten grafischen Benutzeroberfläche darzustellen, welches es dem Benutzer erlaubt das zu konfigurierende SPS-Gerät auszuwählen, wobei je nach ausgewähltem SPS-Gerät unterschiedliche GUI-Elemente auf der ersten grafischen Benutzeroberfläche erscheinen. Dies ist insbesondere dann vorteilhaft, wenn ein Hersteller eines SPS-Geräts verschiedene SPS-Geräte (Sensoren, Aktoren, Maschinen) im Programm hat und so lediglich eine Applikation aktualisieren und der Benutzer lediglich eine erste Applikation installieren muss.

In einer vorteilhaften Weiterbildung umfasst die erste Applikation mehr Elemente auf der ersten grafischen Benutzeroberfläche zur Konfiguration des entsprechenden SPS-Geräts als die zweite Applikation auf der zweiten grafischen Benutzeroberfläche. Vorzugsweise umfasst die zweite Applikation keine Elemente auf der zweiten grafischen Benutzeroberfläche, mit denen das entsprechende SPS-Gerät konfiguriert werden kann.

Das erfindungsgemäße SPS-Verwaltungssystem umfasst eine SPS-Zentraleinheit, zumindest ein SPS-Gerät und ein Computersystem. Das zumindest eine SPS-Gerät und das Computersystem sind an die SPS-Zentraleinheit angeschlossen. Das Computersystem ist dazu ausgebildet, um die erste und die zweite Applikation auszuführen. Das SPS-Verwaltungssystem ist dazu ausgebildet, um das eingangs beschriebene Verfahren auszuführen.

In einer vorteilhaften Weiterbildung ist das zumindest eine SPS-Gerät über PROFINET mit der SPS-Zentraleinheit verbunden.

In einer vorteilhaften Weiterbildung ist das Computersystem über eine Ethernetverbindung oder WIFI-Verbindung oder Mobilfunkverbindung oder Bluetooth^{®}-Verbindung mit der SPS-Zentraleinheit verbunden. Bevorzugt kann die SPS-Zentraleinheit mit dem SPS-Gerät über eine kabelgebundene Datenverbindung, insbesondere einen Feldbus, z.B. PROFINET, EtherCAT, SERCOS, EtherNet/IP und dergleichen verbunden sein.

Nachfolgend wird die Erfindung rein beispielhaft unter Bezugnahme auf die Zeichnungen beschrieben. Es zeigen:
- Figur 1:: eine Übersicht des SPS-Verwaltungssystems mit mehreren SPS-Geräten, einer SPS-Zentraleinheit und einem Computersystem;
- Figur 2:: das Computersystem, auf dem die erste und die zweite Applikation ausgeführt werden; und
- Figur 3:: ein Flussdiagramm, welches ein Verfahren zum Konfigurieren eines SPS-Geräts zeigt.

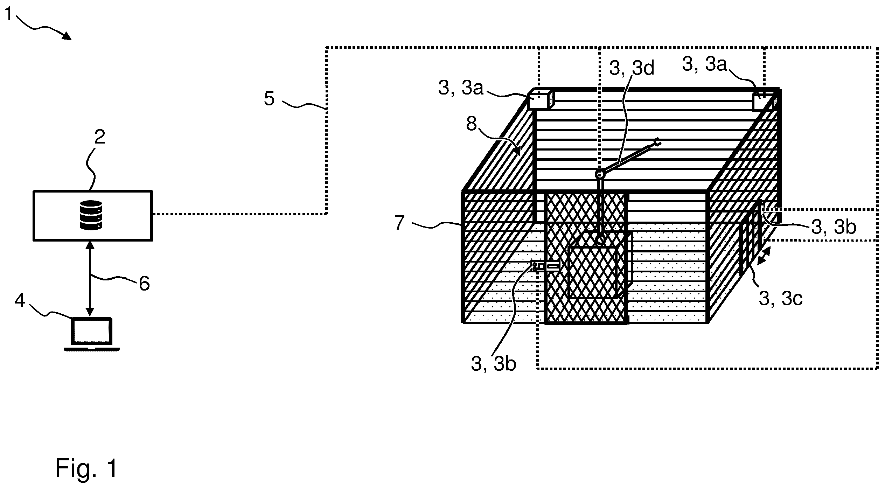

Figur 1 zeigt eine Übersicht über das erfindungsgemäße SPS-Verwaltungssystem 1. Das SPS-Verwaltungssystem umfasst eine SPS-Zentraleinheit 2, zumindest ein SPS-Gerät 3 und ein Computersystem 4. Das zumindest eine SPS-Gerät 3 ist über eine erste Datenverbindung 5, insbesondere über einen PROFIBUS, mit der SPS-Zentraleinheit 2 verbunden. Das Computersystem 4 ist über eine zweite Datenverbindung 6, insbesondere über eine Ethernetverbindung oder WIFI-Verbindung oder Mobilfunkverbindung oder Bluetooth^{®}-Verbindung, mit der SPS-Zentraleinheit 2 verbunden.

Das zumindest eine SPS-Gerät 3 umfasst in diesem Ausführungsbeispiel einen Überwachungssensor 3a, eine Sicherheitszuhaltung 3b, eine Tür 3c und eine Maschine 3d.

Die Maschine 3d ist in einem durch Gitter 7 abgegrenzten Raum 8 angeordnet. Die Überwachungssensoren 3a sind dazu ausgebildet, um die Präsenz einer Person in dem zu überwachenden Raum 8 festzustellen. Die Sicherheitszuhaltungen 3b sind dazu ausgebildet, um zu detektieren, ob eine Tür 3c, die in den Raum 8 hineinführt, geöffnet oder geschlossen ist und/oder um diese Tür 3c zu verriegeln. Die Tür 3c kann auch über einen Antrieb verfügen, wobei z.B. die Öffnungsgeschwindigkeit einstellbar ist.

Die SPS-Zentraleinheit 2 steuert die SPS-Geräte 3 während des Starts und während dem Betrieb des SPS-Verwaltungssystems 1 an. Die SPS-Geräte 3 können über das Computersystem 4 konfiguriert werden. Auch die SPS-Zentraleinheit 2 kann über das Computersystem 4 konfiguriert werden.

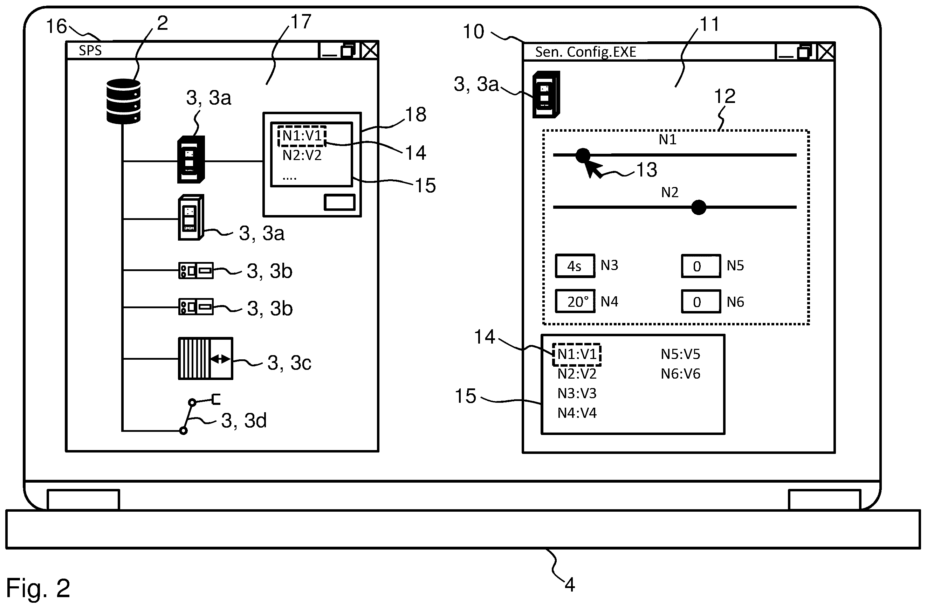

Figur 2 zeigt das Computersystem 4 und erläutert wie über das Computersystem 4 die SPS-Geräte 3 konfiguriert werden können. Das Computersystem 4 ist dazu ausgebildet, um eine erste Applikation 10 auszuführen. Die erste Applikation 10 umfasst eine erste grafische Benutzeroberfläche 11. In diesem Ausführungsbeispiel dient die erste Applikation 10 dazu, um ein SPS-Gerät 3 in Form des Überwachungssensors 3a zu konfigurieren. Die grafische Benutzeroberfläche 11 der ersten Applikation 10 ist explizit auf die möglichen Einstellungen des Überwachungssensors 3a zugeschnitten. Ein Benutzer kann daher sehr intuitiv den Überwachungssensor 3a konfigurieren.

Grundsätzlich kann es für jedes SPS-Gerät 3 eine eigene erste Applikation 10 geben. Es ist auch denkbar, dass es lediglich eine erste Applikation 10 gibt und der Benutzer beim Starten dieser ersten Applikation 10 das zu konfigurierende SPS-Gerät 3 auswählt. In Abhängigkeit diese Auswahl wäre die erste Applikation 10 dann dazu ausgebildet, um die passende erste Benutzeroberfläche 11 anzuzeigen, mit welcher der Benutzer das ausgewählte SPS-Gerät 3 konfigurieren kann.

In dem Ausführungsbeispiel kann der Benutzer sechs verschiedene Eigenschaften 12 des SPS-Geräts 3 in Form des Überwachungssensors 3a konfigurieren. Die zu konfigurierenden Eigenschaften 12 haben die Namen N1, N2, N3, N4, N5 und N6. Die Eigenschaften 12 können über verschiedene GUI-Elemente eingestellt werden. Die erste Benutzeroberfläche 11 der ersten Applikation 10 stellt in diesem Ausführungsbeispiel Schieberegler und Eingabefelder zur Verfügung. Selbstverständlich kann es auch Drop-Down-Menüs oder Optionsschaltflächen geben.

Der Benutzer kann die Konfiguration über ein Eingabegerät, wie eine Tastatur und/oder Maus vornehmen. Selbstverständlich kann die Konfiguration auch durch Berührung eines berührungsempfindlichen Bildschirms vorgenommen werden. In diesem Ausführungsbeispiel ist ein Mauszeiger 13 dargestellt, der gerade einen Schieberegler anklickt, um den Wert der Eigenschaft 12 mit dem Namen N1 zu verändern. Beispielsweise ist es denkbar, dass der Benutzer über den Schieberegler die Aktualisierungsfrequenz des Überwachungssensors 3a ändert.

Jede Eigenschaft 12 des SPS-Geräts 3, die der Benutzer konfigurieren kann, umfasst einen Namen und einen entsprechenden Wert. Die Namen sind in diesem Ausführungsbeispiel mit N1, N2, N3, N4, N5 und N6 bezeichnet. Die Werte sind in diesem Ausführungsbeispiel mit V1, V2, V3, V4, V5 und V6 bezeichnet.

Ein solches Namen-Werte-Paar, also N1 mit V1, kann auch als Konfigurationsparameter 14 bezeichnet werden. Die Konfigurationsparameter 14 liegen insbesondere im Klartext vor, sodass ein Benutzer sehr schnell überprüfen kann, ob er die richtigen Einstellungen für das SPS-Gerät 3 vorgenommen hat.

Die erste Applikation 10 ist dazu ausgebildet, um Benutzereingaben auf der ersten grafischen Benutzeroberfläche 11 zu erkennen und in Abhängigkeit der vorgenommenen Änderungen der Eigenschaften 12 entsprechende Konfigurationsparameter 14 zu erzeugen und diese einer Konfigurationsinformation 15 hinzuzufügen. Eine Konfigurationsinformation 15 kann daher einen oder mehrere Konfigurationsparameter 14 enthalten.

Die erste Applikation 10 ist dazu ausgebildet, um für sämtliche einzustellende Eigenschaften 12 des SPS-Geräts Konfigurationsparameter 14 zu erzeugen und diese der Konfigurationsinformation 15 hinzuzufügen. Bevorzugt ist die erste Applikation 10 allerdings dazu ausgebildet, um lediglich für diejenigen einzustellenden Eigenschaften 12 des SPS-Geräts 3 Konfigurationsparameter 14 zu erzeugen und diese der Konfigurationsinformation 15 hinzuzufügen, die geändert wurden und/oder die von einem vorgegebenen Standardwert abweichen. Dadurch kann die Größe der Konfigurationsinformation 15 klein gehalten werden.

Das Computersystem 4 ist weiter dazu ausgebildet, um eine zweite Applikation 16 auszuführen. Die zweite Applikation 16 umfasst eine zweite grafische Benutzeroberfläche 17. In diesem Ausführungsbeispiel dient die zweite Applikation 16 dazu, um die SPS-Zentraleinheit 2 zu konfigurieren. SPS-Geräte 3, die an die SPS-Zentraleinheit 2 angeschlossen sind, werden beispielsweise auf der zweiten grafischen Benutzeroberfläche 17 angezeigt. Der Benutzer kann beispielsweise eines dieser SPS-Geräte 3 auswählen. In diesem Fall hat der Benutzer den Überwachungssensor 3a ausgewählt. In diesem Ausführungsbeispiel wird die Auswahl dadurch visualisiert, dass das Bild für das ausgewählte SPS-Gerät 3 etwas kräftiger bzw. in einer anderen Farbe bzw. mit einer Umrandung dargestellt ist. Gleichzeitig ist die zweite Applikation 16 dazu ausgebildet, um ein Eingabefeld 18 darzustellen, in welcher die durch die erste Applikation 10 erzeugte Konfigurationsinformation 15 eingefügt werden kann. Dieses Einfügen kann durch einen Kopieren/Einfügen-Befehl erfolgen. In Figur 2 ist die Konfigurationsinformation 15 mit den Konfigurationsparametern 14 von der ersten Applikation 10 in das entsprechende Eingabefeld 18 der zweiten grafischen Benutzeroberfläche 17 zweiten Applikation 16 eingefügt. Die zweite Applikation 16 ist dazu ausgebildet, um aus der Konfigurationsinformation 15 eine SPS-Konfigurationsinformation zu erzeugen. Diese SPS-Konfigurationsinformation wird mittels der zweiten Applikation 16 zu der SPS-Zentraleinheit 2 übertragen. Die SPS-Zentraleinheit 2 ist dazu ausgebildet, um diese SPS-Konfigurationsinformation zu dem angeschlossenen entsprechenden SPS-Gerät 3 zu übertragen. Das entsprechende SPS-Gerät 3 ist wiederum dazu ausgebildet, um die empfangene SPS-Konfigurationsinformation zu laden und sich entsprechend dieser SPS-Konfigurationsinformation zu konfigurieren.

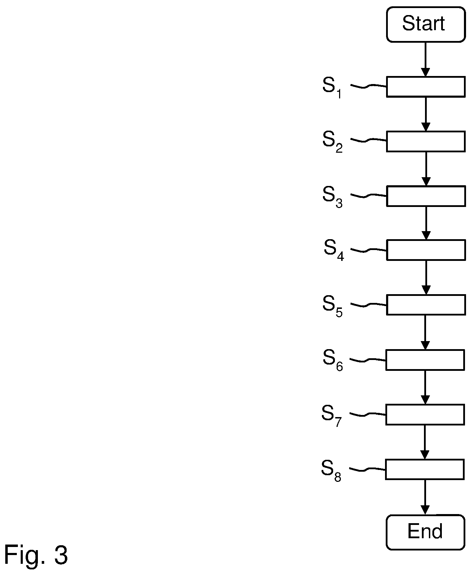

Figur 3 zeigt ein Flussdiagramm, welches ein Verfahren zum Konfigurieren eines SPS-Geräts 3 zeigt. In einem ersten Verfahrensschritt S₁ wird eine erste Applikation 10 ausgeführt und durch diese erste Applikation 10 eine erste grafische Benutzeroberfläche 11 zum Erzeugen einer Konfigurationsinformation 15 für das zumindest eine SPS-Gerät 3 dargestellt. In einem zweiten Verfahrensschritt S₂ wird zumindest eine Benutzereingabe auf der ersten grafischen Benutzeroberfläche 11 durch die erste Applikation 10 erfasst. In einem dritten Verfahrensschritt S₃ wird die Konfigurationsinformation 15 mit zumindest einem Konfigurationsparameter 14 für das zumindest eine SPS-Gerät 3 anhand der erfassten Benutzereingabe durch die erste Applikation 10 erzeugt. In einem vierten Verfahrensschritt S₄ wird eine zweite Applikation 16 ausgeführt und durch diese eine zweite grafische Benutzeroberfläche 17 zur Steuerung der SPS-Zentraleinheit 2 dargestellt. In einem fünften Verfahrensschritt S₅ wird die Konfigurationsinformation 15 von der ersten Applikation 10, insbesondere in ein Eingabefeld zum Konfigurieren des zumindest einen SPS-Geräts 3 auf der zweiten grafischen Benutzeroberfläche 17 der zweiten Applikation 15 übertragen. In einem sechsten Verfahrensschritt S₆ wird anhand der Konfigurationsinformation 15 eine SPS-Konfigurationsinformation durch die zweite Applikation 16 erzeugt. In einem siebten Verfahrensschritt S₇ wird die SPS-Konfigurationsinformation an das zumindest eine SPS-Gerät 3 durch die SPS-Zentraleinheit 2 übertragen. In einem achten Verfahrensschritt S₈ wird die durch das SPS-Gerät 3 empfangene SPS-Konfigurationsinformation durch das SPS-Gerät 3 geladen.

### Bezugszeichenliste

| | |
|---|---|
| SPS-Verwaltungssystem | 1 |
| SPS-Zentraleinheit | 2 |
| SPS-Gerät | 3 |
| Überwachungssensor (SPS) | 3a |
| Sicherheitszuhaltung (SPS) | 3b |
| Tür (SPS) | 3c |
| Maschine (SPS) | 3d |
| Computersystem | 4 |
| Erste Datenverbindung | 5 |
| Zweite Datenverbindung | 6 |
| Gitter | 7 |
| Raum | 8 |
| Erste Applikation | 10 |
| Erste grafische Benutzeroberfläche | 11 |
| Eigenschaften des SPS-Geräts | 12 |
| Mauszeiger | 13 |
| Konfigurationsparameter | 14 |
| Konfigurationsinformation | 15 |
| Zweite Applikation | 16 |
| Zweite grafische Benutzeroberfläche | 17 |
| Eingabefeld | 18 |
| Verfahrensschritte | S₁, S₂, S₃, S₄, S₅, S₆, S₇, S₈ |

## Patentansprüche

1. Verfahren zum Konfigurieren eines SPS-Geräts (3), welches an eine SPS-Zentraleinheit (2) angeschlossen ist, mit einer SPS-Konfigurationsinformation mit den folgenden Verfahrensschritten:
- Ausführen (S₁) einer ersten Applikation (10) und Darstellen einer ersten grafischen Benutzeroberfläche (11) zum Erzeugen einer Konfigurationsinformation (15) für das zumindest eine SPS-Gerät (3) durch die erste Applikation (10);
- Erfassen (S₂) zumindest einer Benutzereingabe auf der ersten grafischen Benutzeroberfläche (11) durch die erste Applikation (10);
- Erzeugen (S₃) der Konfigurationsinformation (15) mit zumindest einem Konfigurationsparameter (14) für das zumindest eine SPS-Gerät (3) anhand der erfassten Benutzereingabe durch die erste Applikation (10);
- Ausführen (S₄) einer zweiten Applikation (16) und Darstellen einer zweiten grafischen Benutzeroberfläche (17) zur Steuerung der SPS-Zentraleinheit (2) durch die zweite Applikation (16);
- Übertragen (S₅) der Konfigurationsinformation (15) von der ersten Applikation (10) in ein Eingabefeld (18) zum Konfigurieren des zumindest einen SPS-Geräts (3) auf der zweiten grafischen Benutzeroberfläche (17) der zweiten Applikation (16);
- Erzeugen (S₆) der SPS-Konfigurationsinformation anhand der Konfigurationsinformation (15) durch die zweite Applikation (16);
- Übertragen (S₇) der SPS-Konfigurationsinformation an das zumindest eine SPS-Gerät (3) durch die SPS-Zentraleinheit (2).

2. Verfahren nach Anspruch 1,
wobei die erste Applikation (10) und die zweite Applikation (16) von demselben Computersystem (4) ausgeführt werden.

3. Verfahren nach Anspruch 1 oder 2,
wobei der zumindest eine Konfigurationsparameter (14) ein Name-Wert-Paar oder mehrere Name-Wert-Paare umfasst.

4. Verfahren nach Anspruch 3,
wobei das Name-Wert-Paar oder die mehreren Name-Wert-Paare die erfasste Einstellung durch die Benutzereingabe eines Elements auf der ersten grafischen Benutzeroberfläche (11) umfasst.

5. Verfahren nach einem der vorstehenden Ansprüche,
wobei der zumindest eine Konfigurationsparameter (14) im Klartext und unverschlüsselt in der Konfigurationsinformation (15) enthalten ist.

6. Verfahren nach einem der vorstehenden Ansprüche,
wobei die Konfigurationsinformation (15) durch einen Kopieren/Einfügen-Befehl von der ersten Applikation (10) in das Eingabefeld (18) der zweiten grafischen Benutzeroberfläche (17) der zweiten Applikation (16) übertragen wird.

7. Verfahren nach einem der vorstehenden Ansprüche,
wobei die SPS-Konfigurationsinformation der Konfigurationsinformation (15) entspricht oder wobei die SPS-Konfigurationsinformation aus der Konfigurationsinformation (15) abgeleitet wird.

8. Verfahren nach einem der vorstehenden Ansprüche,
wobei lediglich für diejenige, über die erste grafische Benutzeroberfläche (11) konfigurierte, Eigenschaft (12) des SPS-Geräts (3) ein Konfigurationsparameter (14) der Konfigurationsinformation (15) hinzugefügt wird, welche durch die Benutzereingabe festgelegt wird.

9. Verfahren nach einem der vorstehenden Ansprüche,
wobei lediglich für diejenige, über die erste grafische Benutzeroberfläche (11) konfigurierte, Eigenschaft (12) des SPS-Geräts (3) ein Konfigurationsparameter (14) der Konfigurationsinformation (15) hinzugefügt wird, welche einen Wert aufweist, der von einem Standardwert abweicht.

10. Verfahren nach einem der Ansprüche 8 und 9,
wobei unabhängig von der, über die erste Benutzeroberfläche (11) konfigurierte, Eigenschaft (12) des SPS-Geräts (3) zumindest ein Konfigurationsparameter (14) der Konfigurationsinformation (15) hinzugefügt wird, der einen bestimmten Wert aufweist.

11. Verfahren nach einem der Ansprüche 1 bis 7,
wobei für jede, über die erste Benutzeroberfläche (11) konfigurierbare, Eigenschaft (12) des SPS-Geräts (3) ein Konfigurationsparameter (14) der Konfigurationsinformation (15) hinzugefügt wird.

12. Verfahren nach Anspruch 11,
wobei eine, mehrere oder alle dieser konfigurierbaren Eigenschaften (12) des SPS-Geräts (3) durch eine Benutzereingabe festgelegt werden.

13. Verfahren nach einem der Ansprüche 11 oder 12,
wobei für eine bestimmte, über die erste Benutzeroberfläche (11) konfigurierbare, Eigenschaft (12) des SPS-Geräts (3) nie ein Konfigurationsparameter (14) der Konfigurationsinformation (15) hinzugefügt wird.

14. Verfahren nach einem der vorstehenden Ansprüche,
wobei das SPS-Gerät (3) Konfigurationsparameter (14), die nicht in der SPS-Konfigurationsinformation enthalten sind, mit einem Standardwert initialisiert.

15. SPS-Verwaltungssystem (1) mit einer SPS-Zentraleinheit (2), zumindest einem SPS-Gerät (3) und einem Computersystem (4), wobei das zumindest eine SPS-Gerät (3) und das Computersystem (4) an die SPS-Zentraleinheit (2) angeschlossen sind, wobei das Computersystem (4) dazu ausgebildet ist, um die erste Applikation (10) und die zweite Applikation (16) auszuführen, wobei das SPS-Verwaltungssystem (1) dazu ausgebildet ist, um das Verfahren nach einem der vorherigen Ansprüche auszuführen.

## Claims

1. A method for configuring a PLC device (3), which is connected to a PLC central unit (2), with PLC configuration information, said method comprising the following method steps:
- executing (S₁) a first application (10) and displaying a first graphical user interface (11) for generating configuration information (15) for the at least one PLC device (3) by the first application (10);
- detecting (S₂) at least one user input on the first graphical user interface (11) by the first application (10);
- generating (S₃) the configuration information (15) with at least one configuration parameter (14) for the at least one PLC device (3) based on the detected user input by means of the first application (10);
- executing (S₄) a second application (16) and displaying a second graphical user interface (17) for controlling the PLC central unit (2) by the second application (16);
- transmitting (S₅) the configuration information (15) from the first application (10) to an input field (18) for configuring the at least one PLC device (3) on the second graphical user interface (17) of the second application (16);
- generating (S₆) the PLC configuration information based on the configuration information (15) by means of the second application (16);
- transmitting (S₇) the PLC configuration information to the at least one PLC device (3) by the PLC central unit (2).

2. A method according to claim 1,
wherein the first application (10) and the second application (16) are executed by the same computer system (4).

3. A method according to claim 1 or 2,
wherein the at least one configuration parameter (14) comprises one name-value-pair or a plurality of name-value pairs.

4. A method according to claim 3,
wherein the name-value pair or the plurality of name-value pairs comprises the detected setting by the user input of an element on the first graphical user interface (11).

5. A method according to any one of the preceding claims,
wherein the at least one configuration parameter (14) is included in plain text and unencrypted in the configuration information (15).

6. A method according to any one of the preceding claims,
wherein the configuration information (15) is transmitted from the first application (10) to the input field (18) of the second graphical user interface (17) of the second application (16) by a copy/paste command.

7. A method according to any one of the preceding claims,
wherein the PLC configuration information corresponds to the configuration information (15) or wherein the PLC configuration information is derived from the configuration information (15).

8. A method according to any one of the preceding claims,
wherein, only for that property (12) of the PLC device (3) which is configured via the first graphical user interface (11), a configuration parameter (14) is added to the configuration information (15) which is defined by the user input.

9. A method according to any one of the preceding claims,
wherein, only for that property (12) of the PLC device (3) which is configured via the first graphical user interface (11), a configuration parameter (14) is added to the configuration information (15) which has a value that differs from a standard value.

10. A method according to one of the claims 8 and 9,
wherein, independently of the property (12) of the PLC device (3) that is configured via the first user interface (11), at least one configuration parameter (14), which has a specific value, is added to the configuration information (15).

11. A method according to any one of the claims 1 to 7,
wherein a configuration parameter (14) is added to the configuration information (15) for each property (12) of the PLC device (3) that can be configured via the first user interface (11).

12. A method according to claim 11,
wherein one, more or all of these configurable properties (12) of the PLC device (3) are defined by a user input.

13. A method according to one of the claims 11 or 12,
wherein a configuration parameter (14) is never added to the configuration information (15) for a specific property (12) of the PLC device (3) that can be configured via the first user interface (11).

14. A method according to any one of the preceding claims,
wherein the PLC device (3) initializes configuration parameters (14) which are not included in the PLC configuration information with a standard value.

15. A PLC management system (1) comprising a PLC central unit (2), at least one PLC device (3) and a computer system (4), wherein the at least one PLC device (3) and the computer system (4) are connected to the PLC central unit (2), wherein the computer system (4) is configured to execute the first application (10) and the second application (16), wherein the PLC management system (1) is configured to carry out the method according to any one of the preceding claims.

## Revendications

1. Procédé de configuration d'un appareil API (3) connecté à une unité centrale API (2), avec une information de configuration API, comprenant les étapes de procédé suivantes consistant à :
- exécuter (S₁) une première application (10) et représenter une première interface utilisateur graphique (11) pour générer une information de configuration (15) pour ledit au moins un appareil API (3), par la première application (10) ;
- saisir (S₂) au moins une entrée utilisateur sur la première interface utilisateur graphique (11) par la première application (10) ;
- générer (S₃) l'information de configuration (15) avec au moins un paramètre de configuration (14) pour ledit au moins un appareil API (3) à l'aide de l'entrée utilisateur saisie, par la première application (10) ;
- exécuter (S₄) une deuxième application (16) et représenter une deuxième interface utilisateur graphique (17) pour la commande de l'unité centrale API (2), par la deuxième application (16) ;
- transmettre (S₅) l'information de configuration (15) de la première application (10) vers un champ de saisie (18) pour configurer ledit au moins un appareil API (3) sur la deuxième interface utilisateur graphique (17) de la deuxième application (16) ;
- générer (S₆) l'information de configuration API à l'aide de l'information de configuration (15) par la deuxième application (16) ;
- transmettre (S₇) l'information de configuration API audit au moins un appareil API (3) par l'unité centrale API (2).

2. Procédé selon la revendication 1,
dans lequel la première application (10) et la deuxième application (16) sont exécutées par le même système informatique (4).

3. Procédé selon la revendication 1 ou 2,
dans lequel ledit au moins un paramètre de configuration (14) comprend une paire nom-valeur ou plusieurs paires nom-valeur.

4. Procédé selon la revendication 3,
dans lequel ladite paire nom-valeur ou lesdites plusieurs paires nom-valeur inclue(nt) le réglage saisi par l'entrée utilisateur d'un élément sur la première interface utilisateur graphique (11).

5. Procédé selon l'une des revendications précédentes,
dans lequel ledit au moins un paramètre de configuration (14) est contenu en texte clair et non crypté dans l'information de configuration (15).

6. Procédé selon l'une des revendications précédentes,
dans lequel l'information de configuration (15) est transférée par une instruction de copier/coller de la première application (10) vers le champ de saisie (18) de la deuxième interface utilisateur graphique (17) de la deuxième application (16).

7. Procédé selon l'une des revendications précédentes,
dans lequel l'information de configuration API correspond à l'information de configuration (15) ou l'information de configuration API est dérivée de l'information de configuration (15).

8. Procédé selon l'une des revendications précédentes,
dans lequel un paramètre de configuration (14) est ajouté à l'information de configuration (15) uniquement pour la propriété (12) de l'appareil API (3), configurée via la première interface utilisateur graphique (11), qui est définie par l'entrée utilisateur.

9. Procédé selon l'une des revendications précédentes,
dans lequel un paramètre de configuration (14) est ajouté à l'information de configuration (15) uniquement pour la propriété (12) de l'appareil API (3), configurée via la première interface utilisateur graphique (11), qui présente une valeur qui diffère d'une valeur par défaut.

10. Procédé selon l'une des revendications 8 et 9,
dans lequel, indépendamment de la propriété (12) de l'appareil API (3) configurée via la première interface utilisateur (11), au moins un paramètre de configuration (14) est ajouté à l'information de configuration (15), lequel présente une valeur déterminée.

11. Procédé selon l'une des revendications 1 à 7,
dans lequel, pour chaque propriété (12) de l'appareil API (3) configurable via la première interface utilisateur (11), un paramètre de configuration (14) est ajouté à l'information de configuration (15).

12. Procédé selon la revendication 11,
dans lequel une, plusieurs ou toutes ces propriétés configurables (12) de l'appareil API (3) sont définies par une entrée utilisateur.

13. Procédé selon l'une des revendications 11 ou 12,
dans lequel, pour une certaine propriété (12) de l'appareil API (3) configurable via la première interface utilisateur (11), un paramètre de configuration (14) n'est jamais ajouté à l'information de configuration (15).

14. Procédé selon l'une des revendications précédentes,
dans lequel l'appareil API (3) initialise avec une valeur par défaut les paramètres de configuration (14) qui ne sont pas contenus dans l'information de configuration API.

15. Système de gestion API (1) comprenant une unité centrale API (2), au moins un appareil API (3) et un système informatique (4), ledit au moins un appareil API (3) et le système informatique (4) étant connectés à l'unité centrale API (2), le système informatique (4) étant conçu pour exécuter la première application (10) et la deuxième application (16), le système de gestion API (1) étant conçu pour mettre en œuvre le procédé selon l'une des revendications précédentes.
